Europäisches Patentamt

European Patent Office

Office européen des brevets

(19)

(11) Publication number: **0 022 660**
**B1**

(12) **EUROPEAN PATENT SPECIFICATION**

(45) Date of publication of patent specification: **25.05.83**

(21) Application number: **80302339.9**

(22) Date of filing: **10.07.80**

(51) Int. Cl.³: **H 02 G 15/115,**
**H 02 G 15/18**

(54) **Method of forming insulated connections and heat shrinkable tube for use therein.**

(30) Priority: **10.07.79 JP 87641/79**
**10.07.79 JP 87642/79**

(43) Date of publication of application:
**21.01.81 Bulletin 81/3**

(45) Publication of the grant of the patent:
**25.05.83 Bulletin 83/21**

(84) Designated Contracting States:
**CH DE FR GB LI NL SE**

(56) References cited:
**DE - B - 2 442 495**
**GB - A - 898 762**
**US - A - 2 716 623**
**US - A - 3 761 602**
**US - A - 3 851 296**
**US - A - 4 084 307**

(73) Proprietor: **SUMITOMO ELECTRIC INDUSTRIES LIMITED**
**No. 15, Kitahama 5-chome Higashi-ku**
**Osaka-shi Osaka (JP)**

(72) Inventor: **Ishise, Kojiro c/o SUMITOMO ELECTRIC IND. LTD.**
**Osaka Works, No. 1-3 Shimaya 1-chome Konohana-ku**
**Osaka-shi Osaka (JP)**
Inventor: **Kojima, Keiichi c/o SUMITOMO ELECTRIC IND. LTD.**
**Osaka Works, No. 1-3 Shimaya 1-chome Konohana-ku**
**Osaka-shi Osaka (JP)**

(74) Representative: **Pearce, Anthony Richmond et al, Marks & Clerk Alpha Tower Suffolk Street Queensway**
**Birmingham B1 1TT (GB)**

Courier Press, Leamington Spa, England.

0 022 660

Method of forming insulated connections and heat shrinkable tube for use therein

This invention relates to a method of forming an insulated connection for an electric wire or cable.

There is an increasing tendency for cross-linked polyethylene insulated electric wires and cables to be used at high voltage and this is accompanied by an increasing requirement for improved reliability of the parts used to connect parts for such cross-linked polyethylene insulated electric wires and cables together. For this purpose so-called molded connection parts have been proposed which are obtained by applying a reinforcing insulation layer made of rubber or plastics, around a connection part of an electric wire or cable, heat molding this assembly under pressure to cause the reinforcing insulation layer to form an integrated unit with the insulation layer of the cable.

On the other hand, there is also a recent tendency for practical application of these molded wires and cables to cover a distance much longer than ever and therefore it becomes increasingly necessary to provide an insulated connection part in which a specific insulated portion [i.e. an insulated portion having a specific structure consisting of two shielding layers (outer semiconductive layers) combined with each other through an insulation material] is provided. Heretofore, conventional methods for forming molded connection parts for cross-linked polyethylene insulated electric wires and cables generally comprise applying a reinforcing layer around the insulated connection part by winding a tape made of polyethylene containing a cross-linking agent or cross-linked polyethylene or alternatively pouring such cross-linking agent containing polyethylene or cross-linked polyethylene into a metal mold provided around the connection part, winding around the thus-provided reinforced material a tape of semiconductive material and then a tape of an insulating material to thereby form a specific insulated portion.

Since these conventional methods require heat molding of the connection part as a whole simultaneously after providing the semiconductor and the specific insulated portion, they have many defects. For example, the tip of the outer semiconductive layer in the specific insulated portion is fluidized or deformed to form a sharp protrusion and the interface betwen the reinforcing insulation layer and the connection part becomes undulant and loses smoothness so that the electric wire or cable cannot provide satisfactory electrical properties.

In order to eliminate the above-described disadvantages a method has been proposed which comprises grinding the surface of the reinforcing insulation layer after the heat molding to smoothen it, winding around the smooth reinforcing insulation layer a tape of semiconductive material to form a specific insulated portion and then heat molding the resulting assembly. This method, however, is disadvantageous in that molding takes a rather long time.

DE—B—2442495 discloses the formation of a cable connection in which heat-shrinkable sleeves are separately passed over respective pairs of cables and engaged one over the other with a layer of adhesive therebetween, so as to surround a support tube. The heat-shrinkable sleeves are then heated so as to shrink them and produce an assembly in which the two sleeves are joined together after having been heat-shrunk.

US—A—3851296 discloses the formation of a cable connection in which a crimp connector connecting a pair of cables is covered first with a semi-conductive layer and then with a two-part insulating means of which the first part comprises a first heat-shrinkable sleeve secured to an elastomeric sleeve so as to hold the latter distended. The second part of the insulating means is a separate, second heat-shrinkable sleeve which is separately placed over one of the cables and heat shrunk over the first part after the latter has been fitted into position and contracted by heating the first heat-shrinkable sleeve to allow the elastomeric sleeve to contract. Thus, the heat-shrinkable sleeves are joined together only after having been heat shrunk.

With such arrangements as disclosed in DE—B—2442495 and 3851296, it is difficult to ensure that the resultant assembly of heat-shrunk seleves has the required electrical properties.

The object of this invention is, therefore, to overcome the above-described defects and to provide good molded connection portions of electric wires and cables.

As a result of extensive research it has been found that a connection part of cross-linked polyolefin insulated electric wires or cables having excellent electrical properties is obtained in a reduced working period by providing, on a cross-linkable reinforcing layer, a heat shrinkable tube having the construction of a specific insulated portion (i.e. an insulated portion having a specific structure consisting of at least two cylindrical heat shrinkable semiconductive layers in combination with each other through an insulation material), heating the tube so that the latter is shrink fitted to the reinforcing layer and then heat molding the reinforcing insulation layer to effect cross-linking.

This invention is based on the above finding and provides a method of forming a connection for a polyolefin insulated electric wire or cable, which comprises the steps of providing a reinforcing insulation layer around a connection part and a pair of cylindrical, semi-condutive heat shrinkable members around the insulating layer and then heating said members so as to cause them to shrink, characterised in that the pair of cylindrical semi-conductive heat shrinkable members are provided as part of a heat shrinkable tube comprising an integrated assembly of said heat shrinkable members and an insulating material electrically separating said members, in that the insulation layer is provided

2

**0 022 660**

around the connection part as a cross-linkable layer in that the heat shrinkable tube is then disposed around the cross-linkable insulation layer, and in that the heating step is effected under pressure and causes the tube to shrink onto the insulation layer and the insulation layer to cross-link and become integrated with the tube.

In another aspect this invention provides a heat-shrinkable tube for use in forming a connection for a polyolefin insulated electrical wire or cable, comprising a cylindrical semi-conductive heat shrinkable member connected with another cylindrical semi-conductive member characterised in that said another member is also heat shrinkable and is electrically insulated from the first-mentioned member by an insulation material so as to provide an integrated heat shrinkable assembly of said members and said insulation material.

In the accompanying drawing:—

Figure 1 is a schematic longitudinal cross-sectional view of an insulated connection part obtained according to the method of this invention and

Figure 2 is a schematic longitudinal sectional view of the upper part of a heat shrinkable tube according to this invention.

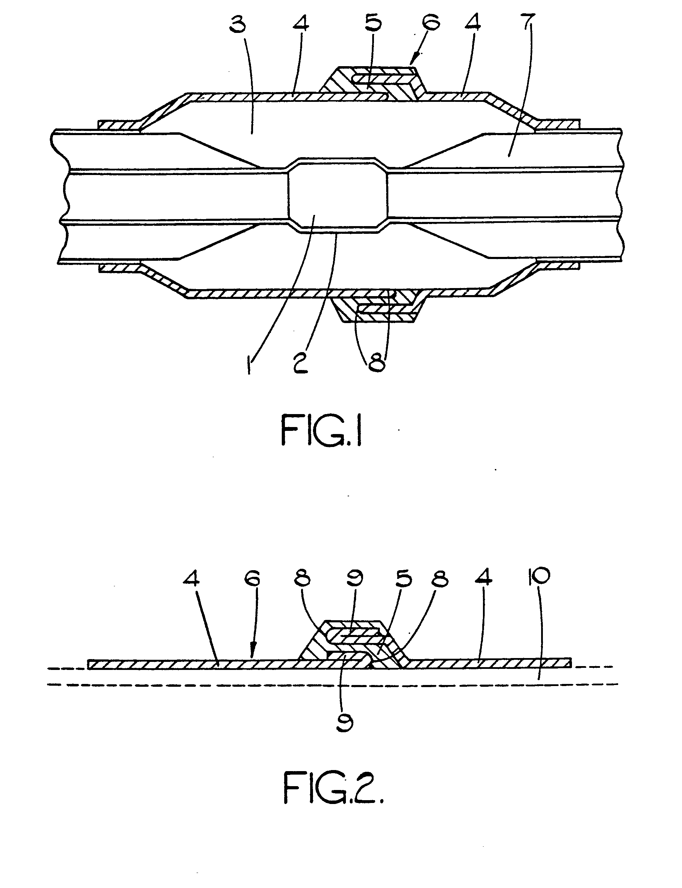

With reference to Figure 1 on a connection part 1 of a conductor is applied an inner semiconductive layer 2 and then a reinforcing insulation layer 3 is provided on the inner semiconductive layer 2. As a material for producing the reinforcing insulation layer 3 those polyolefins can be used which are employed conventionally in cable insulation, such as polyethylene and uncross-linked polyethylene containing a cross-linking agent, such as dicumyl peroxide, ethylene/propylene copolymers. These materials can be applied in the form of a tape by winding it around the inner semiconductive layer 2, or alternatively they can be applied by pouring into a metal mold (not shown) placed around the inner semiconductive layer 2. It is preferred to apply the reinforcing material by pouring it into a metal mold since the surface of the reinforcing insulation layer 3 so formed is smooth and its interface with outer semiconductive layers defined by tube members 4 and a specific insulated portion 5 is smooth.

On the thus-formed reinforcing insulation layer 3 is placed a heat shrinkable tube 6 consisting of the tube members 4 and the specific insulated portion 5, and the tube 6 is heat shrunk using a burner, torch lamp or other conventional heating means. Thereafter, the whole assembly is heated under pressure to cause the reinforcing insulation layer 3 the inner semiconductive layer 2, a cable insulator 7 and the heat shrinkable tube 6 to become integrated with each other, thereby to form the insulated connection part for cross-linked polyolefin-insulated electric wires or cables.

With respect to the heat shrinkable tube 6 used in this invention, tips 8 of the outer semiconductive layers in the specific insulated portion 5 are rounded in order to avoid concentration of electric field. In a preferred embodiment, and as shown in Figure 2, the tips 8 are defined by folding parts of each tube member 4 back over on itself. As the material of construction for the specific insulated portion 5, a thermoplastic resin can be used which can adhere to the reinforcing insulation layer 3, e.g. polyethylene, an ethylene-vinyl acetate copolymer, or an ethylene-propylene copolymer, since it is desirable to bond the specific insulated portion 5 to the reinforcing insulation layer 3 in order for the resulting electric wires or cables to have satisfactory electric properties.

A mixture of the above-described thermoplastic resin and carbon black can be used as a material for producing the tube members 4.

The heat shrinkable tube 6 can be produced as follows. First, the semiconductive heat shrinkable tube members 4 are formed by heating, or bombarding with an electron beam, tubes made of the above-described semiconductive material or by heating the tubes of semiconductive material containing a cross-linking agent, to effect cross-linking and heating the cross-linked material at a temperature higher than its softening point to endow heat-shrinkability to the material thereby to obtain semiconductive heat shrinkable tube members. Then, two heat shrinkable tube members 4 thus produced are combined with each other through the specific insulated portion 5 comprising the above-described insulating material so as to form an assembly of the outer semiconductive layer 4 and the specific insulated portion 5. In a preferred embodiment the tips 8 overlap each other. The assembly is then placed around a metal pipe having a diameter larger than that of the reinforcing insulation layer 3 and heated to form an integrated unit which retains heat shrinkability.

More particularly, the heat shrinkable tube 6 according to a preferred embodiment of this invention is produced as follows:—

A tube having an inner diameter of 25 mm and a thickness of 2 mm is extrusion molded using a semiconductive polyethylene blended with carbon black and expanded so as to have an inner diameter of 70 mm after it is bombarded with electron beam at an intensity of 15 mRad. A tube member of 30 cm in length is cut from this tube and a 5 cm long end portion 9 thereof is folded back to define the respective tip 8. The thus obtained tube member 4 is placed over the surface of a longitudinally split half pipe of aluminium pipe 10 and is heated using a torch lamp (not shown) to effect shrinking.

Then, a cross-linked polyethylene tape which has preliminarily been elongated longitudinally is wound around the folded end portion 9 and the surface of the aluminium pipe adjacent thereto to a thickness of about 3 mm.

Further, the other semiconductive heat-shrinkable tube member 4 having one end portion 9

3

thereof folded in the same manner as described above is placed so that it covers a part of the portion on which cross-linked polyethylene is wound and the aluminium pipe. The thus formed assembly on the aluminium pipe is then heated using a torch lamp to shrink. After the whole assembly is heated at 150°C for 30 minutes to form an integrated unit, the aluminium pipe is removed to obtain a heat shrinkable tube of this invention.

It is preferred to subject the thus-obtained tube 6 to electron beam bombardment only over a narrow region including the specific insulated portion 5 at an intensity of 20 mRad in order to make the shrink ratio of the region including the specific insulated portion 5 smaller than the shrink ratio of the other region.

Since, in the heat shrinkable tube 6 used in this invention, the outer semiconductive tube members 4 and the specific insulated portion 5 together form a pre-formed integrated unit there is no risk of the tip of the outer semiconductive layer in the specific insulated portion becoming fluidized or deforming to form a sharp protrusion leading to deteriorated electrical properties which would be often encountered in a conventional method in which the outer semiconductive layer and specific insulated portion are formed by winding uncross-linked polyethylene tape around the reinforcing insulation layer and followed by heat molding of these members simultaneously together with the reinforcing insulation material.

In addition to the above, the insulated electric wires and cables produced by the method of this invention have the advantage that, in a preferred embodiment of the shrinkable tube according to this invention, the shrink ratio of the specific insulated portion and the neighbouring region is smaller than the shrink ratio of the remaining region and, as a result, this invention is free of problems that retention of shape or configuration is difficult at the connection part of the wires or cables and that the tip of the outer semiconductive layer in the specific insulated portion penetrates into the reinforcing insulation layer, which would be observed in the case where the outer semiconductive layer and the specific insulated portion are formed by placing separately a semiconductive heat shrinkable tube and an insulating heat shrinkable tube in this order on the reinforcing insulation layer, and then heat molding both the tubes simultaneously together with the reinforcing insulation layer.

Further, when the reinforcing insulation layer made of a cross-linking agent containing thermoplastic resin, e.g. polyethylene, is heat treated to cross-link it and then a semiconductive heat shrinkable tube and an insulating heat shrinkable tube are provided on the reinforcing insulation layer separately in this order followed by heating, penetration of the tip of the outer semiconductive layer in the specific insulated portion into the reinforcing insulation layer can be prevented. However, this method takes a relatively long time to connect the cable since heat molding is conducted twice. Nevertheless, this embodiment of this invention can reduce time for working or connecting magnet wires or cables since the heat shrinkable tube can be heat molded together with the reinforcing insulation layer simultaneously after the former is placed on the latter.

In this invention, it is for the purpose of preventing the occurrence of voids that heating of the connection part of electric wires or cables is performed under pressure.

As a means for pressurization, there can be used a method in which the connection part is sealed in a pressurizing container, and gas oil or like fluid is introduced under pressure, or a method in which tension generated by winding vulcanized rubber tape strongly around the connection part of the electric wire or cable is used. Of these methods, the use of a pressurizing container and an inert gas such as nitrogen gas, for pressurization is preferred since the period of time required for heat molding can be shortened and at the same time it is possible to impart a smooth finish to the surface of the connection part of the electric wire or cable. Further advantages of this method are that there is no danger that the gas for pressurization will become incorporated in the reinforcing insulation layer since the reinforcing insulation layer is covered by the heat shrinkable tube, and that it is unnecessary to remove oils after heat molding. Thus, this invention fully utilizes the advantage derived by the use of heat shrinkable tubes.

Examples 1—3 and Comparison Examples 1—5

In order to demonstrate the effects of this invention comparison was made between the method of this invention (Examples 1 to 3) and conventional methods (Comparison Examples 1 to 5) as described below.

Insulated connection parts were formed using a cross-linked polyethylene insulated cable having a conductor of cross section at 150 mm² and an insulation layer of 7 mm in thickness according to the methods shown in Table 1 below.

TABLE 1

| Cable connection method | Comparison Example 1 | Comparison Example 2 | Comparison Example 3 | Comparison Example 4 |
|---|---|---|---|---|
| Reinforcing insulation layer (thickness: 10 mm) | Poured into a metal mold | Poured into a metal mold | Tape wound | Tape wound |
| Outer semiconductive layer | Tape wound | Tape wound | Semiconductive heat shrinkable tube | Semiconductive heat shrinkable tube |
| Specific insulated portion (thickness: 3 mm) (length: 30 mm) | Tape wound | Tape wound | Insulating heat shrinkable tube | Insulating heat shrinkable tube |
| Heat molding Reinforcing insulation layer | Shaped simultaneously, vulcanized tape wound *1 210°C for 4 hours | Vulcanized tape wound 210°C for 4 hours | Shaped simultaneously, at 210°C for 2 hours under nitrogen gas pressure *2 | Under nitrogen gas pressure 210°C for 2 hours |
| Outer semiconductive layer provided with specific insulated portion | (see above) | Vulcanized tape wound 210°C for 2 hours | (see above) | Under nitrogen gas pressure 210°C for 2 hours |

Note:
*1 Vulcanized tape wound: Vulcanized SBR rubber tape was given 100% elongation and wound to a thickness of 10 mm to effect pressurization.
*2 Nitrogen gas pressure: Pressurization was performed at a pressure of 5 kg/cm² using a pressurizing container.

TABLE 1 (continued)

| Cable connection method | Comparison Example 5 | Example 1 | Example 2 | Example 3 |
|---|---|---|---|---|
| Reinforcing insulation layer (thickness: 10 mm) | Poured into a metal mold | Tape wound | Poured into a metal mold | Poured into a metal mold |
| Outer semiconductive layer | Semiconductive heat shrinkable tube | Heat shrinkable tube consisting of an integrated unit of outer semiconductive layer and specific insulated portion | Heat shrinkable tube consisting of an integrated unit of outer semiconductive layer and specific insulated portion | Heat shrinkable tube consisting of an integrated unit of outer semiconductive layer and specific insulated portion |
| Specific insulated portion (thickness: 3 mm) (length: 30 mm) | Insulating heat shrinkable tube | (see above) | (see above) | (see above) |
| Heat molding Reinforcing insulation layer | Shaped simultaneously at 210°C for 2 hours under nitrogen gas pressure | Shaped simultaneously at 210°C for 2 hours under nitrogen gas pressure | Shaped simultaneously, vulcanized tape wound at 210°C for 4 hours | Shaped simultaneously at 210°C for 2 hours under nitrogen gas pressure |
| Outer semiconductive layer provided with specific insulated portion | (see above) | (see above) | (see above) | (see above) |

The appearance of the surface, condition of the tip of the outer semiconductive layer in the specific insulated portion and AC initial breakage value were compared and the results obtained are shown in Table 2 below.

# TABLE 2

| Results | Comparison Example 1 | Comparison Example 2 | Comparison Example 3 | Comparison Example 4 |
|---|---|---|---|---|
| State of interface between Reinforcing insulation layer and outer semiconductive layer | Uneven | Uneven | Rather uneven | Smooth |
| State of tip of outer semiconductive layer in specific insulated portion | Protrusion | No protrusion | Protrusion penetrating into reinforcing insulation layer | No protrusion |
| AC initial break down value | 80 KV | 160 KV | 110 KV | 170 KV |

## TABLE 2 (continued)

| Results | Comparison Example 5 | Example 1 | Example 2 | Example 3 |
|---|---|---|---|---|
| State of interface between Reinforcing insulation layer and outer semiconductive layer | Smooth | Rather uneven | uneven | smooth |
| State of tip of outer semiconductive layer in specific insulated portion | Protrusion penetrating into the reinforcing insulation layer | No protrusion | No protrusion | No protrusion |
| AC initial break down value | 120 KV | 190 KV | 180 KV | 230 KV |

**0 022 660**

From the results shown in Table 2 above, it can be seen that the method of forming insulated connection parts according to this invention as in Examples 1 to 3 is superior to the convention methods as in Comparison Examples 2 and 4 in that this invention enables one to process in a much shortened period of time and that this invention can prevent the occurrence of a protrusion formed by fluidization or deformation of the tip of the outer semiconductive layer in the specific insulated portion as observed in Comparison Example 1 or penetration of the tip of the outer semiconductive layer in the specific insulated portion into the reinforcing insulation layer as encountered in Comparison Examples 3 and 5. Thus, the method of this invention can provide a cable connection having improved electrical properties.

**Claims**

1. A method of forming a connection for a polyolefin insulated electric wire or cable, which comprises the steps of providing a reinforcing insulation layer (3) around a connection part (1) and a pair of cylindrical, semi-conductive heat shrinkable members (4) around the insulating layer (3), and then heating said members (4) so as to cause them to shrink, characterized in that the pair of cylindrical semi-conductive heat shrinkable members (4) are provided as part of a heat shrinkable tube (6), comprising an integrated assembly of said heat shrinkable members (4) and an insulating material (5) electrically separating said members (4), in that the insulation layer (3) is provided around the connection part (1) as a cross-linkable layer in that the heat shrinkable tube (6) is then disposed around the cross-linkable insulation layer (3), and in that the heating step is effected under pressure and causes the tube (6) to shrink onto the insulation layer (3) and the insulation layer (3) to cross-link and become integrated with the tube (6).

2. A method as claimed in Claim 1, wherein said heating under pressure is effected using a pressurizing container and introducing an inert gas into said pressurizing container.

3. A method as claimed in Claim 1 or 2, wherein said reinforcing insulation layer (3) is formed by pouring rubber or plastics material into a metal mold in which said connecting part (1) is disposed.

4. A method as claimed in any preceding Claim, wherein said semi-conductive heat shrinkable members (4), are arranged such that they partially overlap.

5. A method as claimed in any preceding Claim, wherein one end portion (9) of each of said semi-conductive heat shrinkable members (4) is folded.

6. A heat shrinkable tube for use in a method of forming a connection for a polyolefin insulated electrical wire or cable as claimed in Claim 1, comprising a cylindrical semi-conductive heat shrinkable member (4) connected with another cylindrical semi-conductive member (4) characterized in that said another member (4) is also heat shrinkable and is electrically insulated from the first-mentioned member by an insulation material (5) so as to provide an integrated heat shrinkable assembly of said members (4) and said insulation material.

7. a tube as claimed in claim 6, wherein the shrink ratio of a narrow region of the tube including the insulating material (5) is smaller than that of the remaining region of the tube (6).

8. A tube as claimed in Claim 6 or 7, wherein each of said cylindrical semi-conductive heat shrinkable members (4) has a folded portion (9) at one end thereof.

9. A tube as claimed in Claim 6, 7 or 8, wherein said two semi-conductive heat shrinkable members (4) are arranged such that they partially overlap.

10. A connection for an electric wire or cable when produced by the method as claimed in any one of Claims 1 to 5.

**Patentansprüche**

1. Verfahren zur Bildung einer Verbindung bei einem Polyolefin-isoliertem elektrischen Draht oder Kabel, bestehend aus den Schritten: Anbringen einer verstärkenden Isolierschicht (3) um ein Verbindungsteil (1) und eines Paares zylindrischer, halbleitender wärmeschrumpfender Elemente (4) um die Isolierschicht (3), und anschliessendes Erwärmen der genannten Elemente (4), zum diese zum Schrumpfen zu bringen, dadurch gekennzeichnet, dass das Paar der zylindrischen, halbleitende, wärmeschrumpfenden Elemente (4) als Teil eines wärmeschrumpfenden Schlauches (6) angebracht werden, welcher eine integrierte Anordnung der genannten wärmeschrumpfenden Elemente (4) und eines Isoliermateriales (5), welches die genannten Elemente (4) elektrisch trennt, umfasst, dass die Isolierschicht (3) um das Verbindungsteil (1) als eine vernetzbare Schicht angebracht wird, dass der wärmeschrumpfende Schlauch (6) dann um die vernetzbare Isolierschicht (3) angebracht wird, und dass der Wärmeschritt unter Druck durchgeführt wird, wodurch der Schlauch (6) auf die Isolierschicht (3) schrumpft und sich die Isolierschicht (3) vernetzt und mit dem Schlauch (6) integriert wird.

2. Verfahren gemäss Anspruch 1, dadurch gekennzeichnet, dass die Erwärmung unter Druck mit Hilfe eines Druckbehälters durchgeführt wird, wobei in diesen Druckbehälter Inertgas eingeführt wird.

3. Verfahren gemäss Anspruch 1 oder 2, dadurch gekennzeichnet, dass die verstärkende Isolierschicht (3) gebildet wird, indem in eine Metallform, in welcher das Verbindungsteil (1) angebracht ist, Gummi- oder Kunststoffmaterial eingegossen wird.

9

4. Verfahren gemäss einem oder mehreren der vorangehenden Ansprüche, dadurch gekennzeichnet, dass die halbleitenden wärmeschrumpfenden Elemente (4) so angeordnet sind, dass sie teilwise überlappen.

5. Verfahren gemäss einem oder mehreren der vorangehenden Ansprüche, dadurch gekennzeichnet, dass ein Endteil (9) eines jeden der genannten, halbleitenden wärmeschrumpfenden Elemente (4) gefaltet ist.

6. Wärmeschrumpfender Schlauch zur Verwendung in einem Verfahren zur Bildung einer Verbindung bei einem Polyolefin-isolierten elektrischen Draht oder Kabel gemäss Anspruch 1, welcher ein zylindriches halbleitendes, wärmeschrumpfendes Element (4) umfasst, das mit einem weiteren zylindrischen halbleitenden Element (4) in Verbindung ist, dadurch gekennzeichnet, dass das weitere Element (4) ebenfalls wärmeschrumpfend und elektrisch von dem erstgenannten Element mit Hilfe eines Isoliermaterials (5) getrennt ist, so dass diese eine integrierte wärmeschrumpfende Anordnung der genannten Elemente (4) und des genannten Isiliermaterials darstellen.

7. Schlauch gemäss Anspruch 6, dadurch gekennzeichnet, dass das Schrumpfverhältnis eines engen Bereiches des Schlauches einschliesslich des Isoliermateriales (5) kleiner ist als das des restlichen Bereiches des Schlauches (6).

8. Schlauch gemäss Anspruch 6 oder 7, dadurch gekennzeichnet, dass die genannten zylindrischen halbleitenden wärmeschrumpfenden Elemente (4) an einem Ende derselben einen gefalteten Teil (9) aufweisen.

9. Schlauch gemäss Anspruch 6, 7 oder 8, dadurch gekennzeichnet, dass die zwei halbleitenden, wärmeschrumpfenden Elemente (4) so angeordnet sind, dass sie teilweise überlappen.

10. Verbindung für einen elektrischen Draht oder ein elektrisches Kable, dadurch gekennzeichnet, dass diese nach dem Verfahren einer oder mehrerer der Ansprüch 1 bis 5 hergestellt wird.

## Revendications

1. Méthode pour former une connexion pour conducteur ou câble électrique isolé aux polyoléfines, comprenant les phases consistant à prévoir une couche isolante de renfort (3) autour d'une pièce de connexion (1) et une paire d'éléments cylindriques, semi-conducteurs, rétractables à chaud (4) autour de la couche isolante (3), puis à chauffer lesdits éléments (4) de façon à les faire se rétreindre, caractérisée en ce que la paire d'éléments cylindriques semi-conducteurs rétractables à chaud (4) est prévu comme partie d'un tube rétractable à chaud (6), comprenant un ensemble solidarisé constitué desdits éléments rétractables à chaud (4) et d'un matériau isolant (5) séparant, au point de vue électrique, lesdits éléments (4); en ce que la couche isolante (3) est prévue autour de la pièce de connexion (1) comme couche pouvant subir une réticulation; en ce que le tube rétractable à chaud (6) est alors disposé autour de la couche isolante (3) qui peut subir la réticulation; et en ce que la phase de chauffage s'effectue sous pression et fait que le tube (6) doit se rétreindre sur la couche isolante (3) et que la couche isolante (3) doit subir la réticulation et se solidariser avec le tube (6).

2. Méthode selon la revendication 1, caractérisée en ce que ledit chauffage sous pression s'effectue en utilisant un réservoir de mise sous pression et en introduisant un gaz inerte dans ledit réservoir de mise sous pression.

3. Méthode selon la revendication ou la revendication 2, caractérisée en ce que ladite couche isolante de renfort (3) est formée en coulant du caoutchouc ou un matériau plastique dans un moule métallique dans lequel est disposée ladite pièce de connexion (1).

4. Méthode selon l'une quelconque des revendications précédentes, caractérisée en ce que lesdits éléments semiconducteurs, rétractables à chaud (4) sont disposés de façon à se recouvrir partiellement.

5. Méthode selon l'une quelconque des revendications précédentes, caractérisée en ce que l'une des portions d'extrémité (9) de chacun desdits éléments semi-conducteurs rétractables à chaud (4) est repliée.

6. Tube rétractable à chaud pour utiliser dans une méthode de formage d'une connexion pour conducteur ou câble électrique isolé aux polyoléfines, selon la revendication 1, comprenant un élément cylindrique semi-conducteur rétractable à chaud (4) connecté à un autre élément cylindrique semi-conducteur (4), caractérisé en ce que ledit autre élément (4) est également rétractable à chaud et est isolé électriquement de l'élément mentionné en premier par un matériau isolant (5) de façon à donner un ensemble solidarisé rétractable à chaud constitué desdits éléments (4) et dudit matériau isolant.

7. Tube selon la revendication 6, caractérisé en ce que le rapport de rétraction d'une région étroite du tube, y compris le matériau isolant (5), est inférieur à celui du reste du tube (6).

8. Tube selon la revendication 6 ou la revendication 6, caractérisé en ce que chacun desdits éléments cylindriques semi-conducteurs rétractables à chaud (4) comporte à l'une de ses extrémités une portion repliée (9).

9. Tube selon l'une des revendications 6, 7 ou 8, caractérisé en ce que les deux dits éléments semi-conducteurs rétractables à chaud (4) sont disposés de façon à se recouvrir partiellement.

10. Connexion pour conducteur ou câble électrique produite par la méthode revendiquée dans l'une quelconque des revendications 1 à 5.

FIG.I

FIG.2.